# EUROPEAN PATENT APPLICATION

(11) **EP 4 841 531 A1**
(43) Date of publication of application: **18.11.2026**
(21) Application number: 24916906.1
(22) Date of filing: 23.12.2024
(51) Int. Cl.: G06N 99/00, G06F 17/10, G06Q 10/04

(54) **INFORMATION PROCESSING DEVICE, INFORMATION PROCESSING METHOD, AND PROGRAM**

(30) Priority: 10.01.2024 JP 2024002073
(71) Applicant: Calmarion Inc., Tokyo 150-0002 (JP)
(72) Inventor: YOSHITAKE, Junki, Tokyo 112-0001 (JP)
(74) Representative: Patentanwaltskanzlei WILHELM & BECK
(86) International application number: PCT/JP2024/045384
(87) International publication number: WO 2025/150404

(57) **Abstract**

An information processing device (1) includes: an acquisition section (21) that acquires an initial value related to calculation of a value of a target function which includes one or more parameters directly or indirectly as arguments; and a control section (2) that calculates a differential coefficient of the target function, a calculation process of calculating the differential coefficient by the control section including a first process and a second process, the calculation process of calculating the differential coefficient by the control section including a first iterative process, the first process including a part of the first iterative process, the second process including a part of the first iterative process other than the above part, the calculation process of calculating the differential coefficient by the control section including a third process that includes a calculation process of automatic differentiation applied to a process which does not include the first process and which includes the second process, the first process including a first iteration of a process iterated in the first iterative process, and the first iterative process being an iterative process of obtaining a solution of a self-consistent equation.

## Description

### Technical Field

The present invention relates to an information processing device, an information processing method, and a program.

### Background Art

A technology is known which carries out analysis of optimization or the like of a parameter describing a target system such as a material system. For example, Patent Literature 1 discloses a technology for designing a substance based on quantum mechanical calculation.

### Citation List

### [Patent Literature]

[Patent Literature 1]
Japanese Patent Application Publication Tokukai No. 2016-69302

### Summary of Invention

### Technical Problem

As one of the analysis methods as described above, a method using automatic differentiation is also known. While the accuracy of the analysis can be improved by using automatic differentiation, it is desirable that the automatic differentiation can be executed at a lower calculation cost. The purpose of one aspect of the present invention is to realize a technology that is capable of suppressing a calculation cost in a calculation method using automatic differentiation.

### Solution to Problem

In order to attain the object, an information processing device in accordance with an aspect of the present invention includes: an acquisition section that acquires an initial value related to calculation of a value of a target function which includes one or more parameters directly or indirectly as arguments; and a control section that calculates a differential coefficient of the target function, a calculation process of calculating the differential coefficient by the control section including a first process and a second process, the calculation process of calculating the differential coefficient by the control section including a first iterative process, the first process including a part of the first iterative process, the second process including a part of the first iterative process other than said part, the calculation process of calculating the differential coefficient by the control section including a third process that includes a calculation process of automatic differentiation applied to a process which does not include the first process and which includes the second process, the first process including a first iteration of a process iterated in the first iterative process, and the first iterative process being an iterative process of obtaining a solution of a self-consistent equation.

In order to attain the object, an information processing method in accordance with an aspect of the present invention includes: an acquisition step of acquiring an initial value related to calculation of a value of a target function which includes one or more parameters directly or indirectly as arguments; and a calculation step of calculating a differential coefficient of the target function, a calculation process of calculating the differential coefficient in the calculation step including a first process and a second process, the calculation process of calculating the differential coefficient in the calculation step including a first iterative process, the first process including a part of the first iterative process, the second process including a part of the first iterative process other than said part, the calculation process of calculating the differential coefficient in the calculation step including a third process that includes a calculation process of automatic differentiation applied to a process which does not include the first process and which includes the second process, the first process including a first iteration of a process iterated in the first iterative process, and the first iterative process being an iterative process of obtaining a solution of a self-consistent equation.

The information processing device in accordance with each aspect of the present invention may be realized by a computer. In this case, a program for causing a computer to realize the information processing device by causing the computer to operate as each section (software element) included in the information processing device, and a computer-readable storage medium storing the program also fall within the scope of the present invention.

### Advantageous Effects of Invention

According to one aspect of the present invention, a calculation cost can be suppressed in a calculation method using automatic differentiation.

### Brief Description of Drawings

Fig. 1 is a block diagram illustrating a configuration of an information processing device in accordance with an embodiment of the present invention.
Fig. 2 is a flowchart illustrating a flow of information processing in accordance with an embodiment of the present invention.
Fig. 3 is a flowchart illustrating a flow of information processing in accordance with an embodiment of the present invention.
Fig. 4 is a flowchart illustrating a flow of information processing in accordance with an embodiment of the present invention.
Fig. 5 is a flowchart illustrating a flow of information processing serving as a base of an embodiment of the present invention.
Fig. 6 is a flowchart illustrating a flow of information processing serving as a base of an embodiment of the present invention.
Fig. 7 is a flowchart illustrating a flow of information processing in accordance with an embodiment of the present invention.
Fig. 8 is a block diagram illustrating a configuration of an information processing device in accordance with an embodiment of the present invention.
Fig. 9 is a flowchart illustrating a flow of information processing in accordance with an embodiment of the present invention.
Fig. 10 is a flowchart illustrating a flow of information processing in accordance with an embodiment of the present invention.
Fig. 11 is a block diagram illustrating a configuration of an information processing device in accordance with an embodiment of the present invention.
Fig. 12 is a flowchart illustrating a flow of information processing in accordance with an embodiment of the present invention.

### Description of Embodiments

### (Outline of information processing in accordance with each embodiment of present invention)

First, the following description will discuss an outline of information processing in accordance with each embodiment described in this specification. An information processing device and an information processing method in accordance with each embodiment described in this specification can be used, for example, to design (also referred to as inverse design) a system or a substance having desired performance and physical properties. In an ordinary simulation, for example, an arrangement of atoms, an impurity distribution of a semiconductor, manufacturing conditions, and the like are set as parameters p, and a target function related to performance or physical properties such as a superconducting transition temperature, voltage-current characteristics, and a defect density determined according to the parameters is calculated. Meanwhile, the information processing device and the information processing method in accordance with each embodiment described in this specification can be suitably used for a problem of designing (inverse-designing) parameters p such as an arrangement of atoms, an impurity distribution of a semiconductor, and manufacturing conditions so as to achieve a desired superconducting transition temperature, desired voltage-current characteristics, a desired defect density, and the like. In another example, the information processing device and the information processing method can be used to estimate a parameter describing a target system from limited measurement results related to the target system.

In other words, the information processing device and the information processing method in accordance with each embodiment described in this specification can be suitably applied to a problem of finding a parameter p that maximizes or minimizes a target function related to performance or physical properties in the inverse design or the like as described above. In order to solve such a problem, it is useful to know a derivative of the target function with respect to p. However, in a case where p is high-dimensional, there is a problem that obtaining all derivatives of the target function with respect to p requires a high calculation cost. According to the information processing device and the information processing method in accordance with each embodiment described in this specification, a calculation cost can be reduced in a case where a derivative of a target function with respect to p is calculated by an iterative method.

In the information processing device and the information processing method of the present disclosure, more specifically, the following components are considered:
- a set P of at least one parameter pₐ (where a is an index enumerating the at least one parameter),
- Q which is a subset of the set P,
- a state variable X which is a set of at least one state variable x_{b} (where b is an index enumerating the at least one parameter), and
- a function F(Q,X).
Hereinafter, P or Q is also simply referred to as a parameter. Further, X is also simply referred to as a state variable. Moreover, X_{ANS}(P) which is a value of the state variable X set based on a value of the parameter P is considered. Hereinafter, X_{ANS}(P) is also simply expressed as X(P). A case where the set Q is not an empty set corresponds to a case where the function F explicitly depends on any of the parameters pₐ included in the set P. Such a function F may be expressed as a target function (F) including one or more parameters (pₐ) directly as arguments. Meanwhile, a case where the set Q is an empty set corresponds to a case where the function F does not explicitly depend on any of the parameters pₐ included in the set P. Such a function F may be expressed as a target function (F) including one or more parameters (pₐ) indirectly as arguments. Further, F(Q,X) only needs to depend on at least one of x_{b}. For example, F may be any of x_{b} itself.

Thus, the target function (F) can be expressed as a function taking, as arguments, a subset (Q) of the one or more parameters and one or more state variables (X(P)) taking the one or more parameters as arguments. The above-described state variable x_{b} does not need to be related to a physical state.

In the information processing device and the information processing method in accordance with this specification, for example, a value of a derived function ∂F(Q,X_{ANS}(P))/∂pₐ of F(Q,X_{ANS}(P)) with respect to each pₐ is numerically obtained. A specific form of F(Q,X_{ANS}(P)) depends on a target of the information processing device and the information processing method.

As can be seen from the above notation, ∂F(Q,X_{ANS}(P))/∂pₐ includes a contribution in which the target function F depends on the parameter P via the one or more state variables X.

X_{ANS}(P) may also depend on a parameter which is not included in P. Hereinafter, for the sake of brevity of notation, the dependence of X_{ANS} on a parameter which is not included in P may not be explicitly expressed. Moreover, the function F may also depend on a parameter which is not included in P. Hereinafter, for the sake of brevity of notation, the dependence of the function F on a parameter which is not included in P may not be explicitly expressed.

X_{ANS}(P) is set based on a target of the information processing device and the information processing method. X_{ANS}(P) may be an implicit function of P, as long as an iterative calculation method for obtaining a numerical solution of X_{ANS}(P) is known. For example, it is only necessary to know a function φ that is expected to obtain a numerical solution of X_{ANS}(P) as a convergence value of Xᵢ by repeating calculation of Xᵢ=φ(P,Xᵢ₋₁) starting from a certain appropriate initial condition X₀. The function φ does not need to be fixed, and may be a function φᵢ that changes according to iteration and that is expected to obtain a numerical solution of X_{ANS}(P) as a convergence value of Xᵢ by repeating calculation of Xᵢ=φᵢ(P,Xᵢ₋₁). For example, φᵢ may obtain Xᵢ from Xᵢ=φ(Vᵢ(P),Xᵢ₋₁) using a value Vᵢ(P) as a parameter, where the value Vᵢ(P) is a value of a function Vᵢ that depends on i rather than P itself and that satisfies lim_{i→∞}Vᵢ(P)=P. For example, φᵢ may obtain a numerical solution of a solution X_{ANS}(P) of X=φ(P,X) using an annealing method. A value of each state variable x_{b} included in the value Xᵢ of the state variable is expressed as x_{(i,b)}.

φ does not necessarily need to be a function that can obtain a numerical solution of X_{ANS}(P), and for example, may be a function that cannot obtain a numerical solution of X_{ANS}(P) by the repeated calculation for a certain initial condition X₀. For example, φ may be such that X=φ(P,X) has a plurality of solutions, X_{ANS}(P) is one of the plurality of solutions, and in a case where the repeated calculation is carried out starting from a certain initial condition X₀, a numerical solution corresponding to a solution different from X_{ANS}(P) among the plurality of solutions of X=φ(P,X) is obtained. In that case, for example, a numerical solution of X_{ANS}(P) is obtained by carrying out calculation starting from a plurality of initial values.

### Embodiment 1

Next, an embodiment of the present invention will be described in detail.

### (Configuration of information processing device 1)

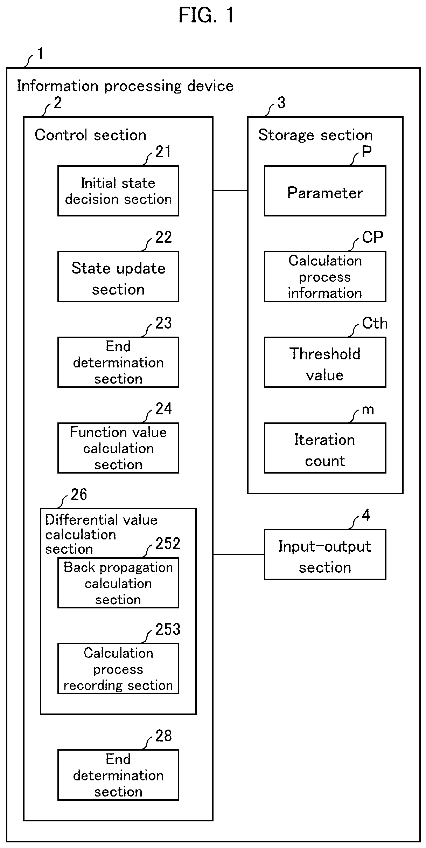

Fig. 1 is a block diagram illustrating a configuration of an information processing device 1 in accordance with the present embodiment. As illustrated in Fig. 1, the information processing device 1 includes a control section 2, a storage section 3, and an input-output section 4.

### (Storage section 3)

The storage section 3 stores various data and information referred to by the control section 2, and various data and information derived by the control section 2. For example, as illustrated in Fig. 1, the storage section 3 stores a parameter P, calculation process information CP, a threshold value Cth, and an iteration count m.

Here, the parameter P indicates, for example, the set P of the at least one parameter pₐ (where a is an index given to the at least one parameter) described above. The calculation process information CP is, for example, information pertaining to various calculation processes executed by the control section 2, and includes, for example, information used in automatic differentiation described later. The threshold value Cth is, for example, a threshold value referred to in a determination process of determining whether or not a convergence condition is satisfied. The iteration count m is, for example, a value defining the number of iterations of target calculation by the control section 2. A more specific description of various data and information stored in the storage section 3 will be given later.

### (Input-output section 4)

The input-output section 4 is configured to include, for example, at least one of input-output devices such as a keyboard, a mouse, a display, a printer, and a touch panel. Alternatively, the input-output section 4 may be configured such that input-output apparatuses such as a keyboard, a mouse, a display, a printer, and a touch panel are connected thereto. In a case of this configuration, the input-output section 4 receives input of various information to the information processing device 1 from the connected input apparatus. Further, the input-output section 4 outputs various information to the connected output apparatus under the control of the control section 2. Examples of the input-output section 4 include an interface such as a universal serial bus (USB).

### (Control section 2)

As illustrated in Fig. 1, the control section 2 includes an initial value decision section 21, a state update section 22, an end determination section 23, a function value calculation section 24, a differential value calculation section 26, and an end determination section 28.

The initial value decision section 21 sets an initial value X₀ of the state variable X. The initial value decision section 21 may set the initial value X₀ to, for example, a predetermined value or may set the initial value X₀ using a random number. The initial value decision section 21 may set the initial value X₀ to a value input externally via the input-output section 4. The initial value decision section 21 may be expressed as an acquisition section that acquires an initial value (e.g., an initial value X₀ of X which is an argument of a target function F) related to calculation of a value of a target function (F) including one or more parameters (pₐ) directly or indirectly as arguments.

The state update section 22 updates the state variable X. For example, the state update section 22 obtains, using Xᵢ=φ(P,Xᵢ₋₁), Xᵢ which is a new value of the state variable X. Details of the process carried out by the state update section 22 will be described later.

The end determination section 23 determines whether or not to end the iteration of the target calculation. Details of the process carried out by the end determination section 23 will be described later.

The function value calculation section 24 calculates a value of a target function. For example, the function value calculation section 24 calculates a value F(Q,Xₙ₊ₘ) of the function F. Details of the process carried out by the function value calculation section 24 will be described later.

The differential value calculation section 26 functions as a calculation section that calculates a differential coefficient of the target function (F). For example, as illustrated in Fig. 1, the differential value calculation section 26 includes a back propagation calculation section 252 and a calculation process recording section 253. Details of the process carried out by the differential value calculation section 26 will be described later.

The end determination section 28 determines whether or not a target process has been executed a predetermined number of times. Details of the process carried out by the end determination section 28 will be described later.

### <Flow of processing by information processing device 1>

The following description will discuss a flow of processing by the information processing device 1. As an outline, the information processing device 1 carries out:
- a convergent solution calculation step (also referred to as step S1), and
- a process S2 step (also referred to as step S2).
The entirety of step S1 and step S2 may be referred to as a differential coefficient calculation process. Here, the differential coefficient calculation process includes, for example, an iterative process (also referred to as a first iterative process). Step S1 is also referred to as a first process, and includes, for example, a part of the iterative process as will be described later. Meanwhile, step S211 and step S212 described later in step S2 are also referred to as a second process, and include a part of the iterative process other than the above part, as will be described later. Step S213 described later in step S2 may be included in the second process. Further, as will be described later, the differential coefficient calculation process includes a calculation process of automatic differentiation applied to a process which does not include the first process and which includes the second process. The "calculation process of automatic differentiation applied to a process which does not include the first process and which includes the second process" is also referred to as a third process.

Further, as will be described later, the iterative process (first iterative process) includes an update process of updating one or more state variables (X). In other words, a numerical solution of each of the one or more state variables (X) taking the parameter P as an argument is obtained by the iterative process (first iterative process). Further, the third process includes a process of calculating a differential coefficient of the target function (F) by using automatic differentiation. Furthermore, in the process in accordance with the present embodiment, the third process includes a process of calculating the differential coefficient of the target function (F) by using reverse-mode automatic differentiation, as will be described later.

### (Step S1)

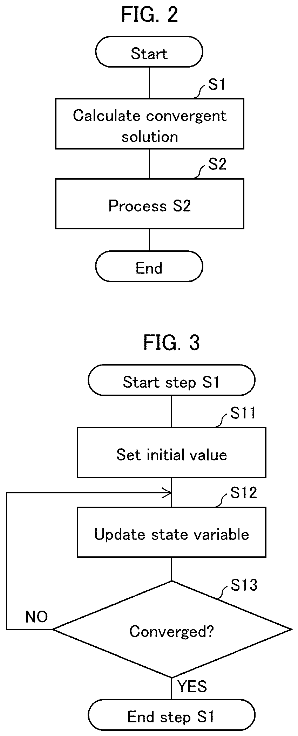

The convergent solution calculation step (step S1) includes, for example, steps S11 through S13 as illustrated in Fig. 3.

### (Step S11)

In step S11, the initial value decision section 21 sets the initial value X₀ of the state variable X. The initial value X₀ may be input externally via the input-output section 4.

### (Step S12)

Next, in step S12, the state update section 22 updates the state variable X. That is, Xᵢ which is a new value of the state variable X is obtained using Xᵢ=φ(P,Xᵢ₋₁). Here, i corresponds to the iteration number of step S12. For example, in a case where step S12 is executed for the first time, the state update section 22 obtains X₁ using X₁=φ(P,X₀).

### (Step S13)

Next, in step S13, the end determination section 23 determines whether to end the iteration of the calculation in step S12. In the present embodiment, the end determination section 23 determines whether Xᵢ obtained in the immediately preceding step S12 satisfies a convergence condition. In other words, the end determination section 23 executes a convergence determination process related to at least one of the one or more state variables. In a case where the Xᵢ does not satisfy the convergence condition, step S12 is executed again. In a case where the Xᵢ satisfies the convergence condition, step S1 ends, and step S2 is executed. The convergence condition used in step S13 will be described later.

Hereinafter, i in a case where it is determined that Xᵢ satisfies the convergence condition is also expressed as n.

### (Additional remarks: Convergence determination in step S13)

A method by which the end determination section 23 determines whether Xᵢ satisfies the convergence condition is not particularly limited, and may be a method according to the purpose of the information processing method. The end determination section 23 determines that Xᵢ satisfies the convergence condition when C(Xᵢ₋₁,Xᵢ)<Cth is satisfied, based on, for example, a value C(Xᵢ₋₁,Xᵢ) of a function C depending on Xᵢ₋₁ and Xᵢ and the threshold value Cth, and otherwise determines that Xᵢ does not satisfy the convergence condition. The function C may depend on any one or more of X₀, X₁, ..., Xᵢ₋₂. The function C may depend only on Xᵢ and may not depend on X₀, X₁, ..., Xᵢ₋₁. Values of these state variables are added to the calculation process information CP stored in the storage section 3 in the calculation process as necessary.

The end determination section 23 determines convergence using, for example, Xᵢ newly obtained in step S12 and Xᵢ₋₁ obtained in the execution of immediately preceding step S12. For example, the end determination section 23 determines, using a predetermined threshold value Cth, that Xᵢ satisfies the convergence condition when |Xᵢ-Xᵢ₋₁|<Cth is satisfied, and otherwise determines that Xᵢ does not satisfy the convergence condition. Here, |Xᵢ-Xᵢ₋₁|=(Σ_{b}(x_{(i,b)}-x_{(i-1,b)})²)^{0.5} is satisfied.

In a case where the function C does not depend on X₀, X₁, ..., Xᵢ₋₁, the end determination section 23, for example, determines that Xᵢ satisfies the convergence condition when C(Xᵢ)<Cth is satisfied, and otherwise determines that Xᵢ does not satisfy the convergence condition. For example, such convergence determination may be carried out in a case where the state variable X for which the value of C(X) becomes 0 is obtained by an iterative method.

### (Step S2)

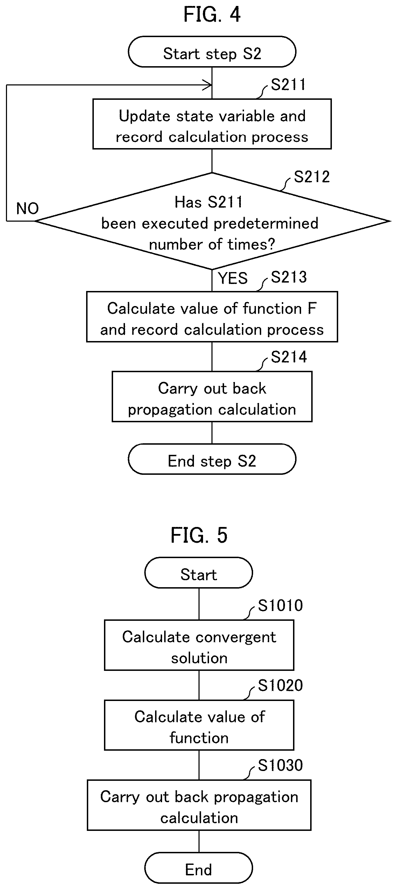

As described above, step S1 is executed, and after the end of step S1, step S2 (process S2 step) is carried out. Fig. 4 is a flowchart illustrating step S2. As illustrated in Fig. 4, step S2 includes step S211, step S212, step S213, and step S214. All or some of these steps S211 through S213 constitute an example of the second process described above. Further, step S214 can also be regarded as an example of the third process described above.

### (Step S211)

In step S211, the state update section 22 obtains Xₙ₊ₖ using Xₙ₊ₖ=φ(P,Xₙ₊ₖ₋₁). Here, k corresponds to the iteration number of step S211. For example, in a case where step S211 is executed for the first time, the state update section 22 obtains Xₙ₊₁ using Xₙ₊₁=φ(P,Xₙ). Note that Xₙ is Xₙ obtained in step S1.

In step S211, for the calculation carried out by the state update section 22 in step S211, the calculation process recording section 253 of the differential value calculation section 26 adds information necessary for carrying out reverse-mode automatic differentiation to the calculation process information CP. The information necessary for carrying out the reverse-mode automatic differentiation may be recorded in the form of, for example, a calculation graph, or each Xₙ₊ₖ may be recorded as checkpoint information, and a calculation graph may be configured using Xₙ₊ₖ as necessary when back propagation calculation is carried out in step S214 described later. In other words, in the third process described above, information of the calculation process in the second process recorded at the checkpoint is used. For example, among the information included in the calculation process information CP, the information of the calculation process in the second process recorded at the checkpoint may be used in the third process described above. In each embodiment of the present application, "carrying out reverse-mode automatic differentiation" refers to carrying out back propagation calculation of a differential value, and does not include recording of a calculation process necessary for original forward calculation and back propagation calculation of the differential value.

### (Step S212)

In step S212, the end determination section 28 determines whether step S211 has been executed a predetermined number of times. In a case where step S211 has been executed the predetermined number of times, step S213 is executed. In a case where step S211 has not been executed the predetermined number of times, step S211 is executed again. Assuming that the predetermined number of times step S211 is executed is m, Xₙ₊ₘ is obtained by executing step S211 m times. A method of setting m is, for example, as follows.

An iteration count m may be set based on, for example, consideration of a target of the information processing method before the execution of step S1. For example, in a case where a manner of convergence of Xᵢ by φ in the vicinity of a convergent solution is known, m may be set based on the manner of convergence. For example, in a case where it is known that Xᵢ converges faster than linear convergence, for example, in a case where it is known that quadratic convergence occurs, m may be 1. This can also be expressed as that an application target of automatic differentiation may be one of processes iterated a plurality of times in the first iterative process.

The iteration count m may be set based on, for example, test calculation before the execution of step S1. For example, in a case where the differential coefficient of F with respect to each pₐ included in P is obtained for a plurality of values of P, a preferable value of the iteration count m in step S2 may be obtained for a representative value of P, and the preferable value of the iteration count m may be used in calculation for the plurality of values of P.

The iteration count m may be set based on, for example, the manner of convergence of Xᵢ obtained in step S1. For example, in a case where Xᵢ converges in such a manner that |Xᵢ-Xᵢ₋₁|<λ|Xᵢ₋₁-Xᵢ₋₂| is satisfied using a parameter λ which is a value less than 1 in step S1, m may be set such that λ^{m} (λ to the m-th power) becomes sufficiently small, or such that λ^{m} becomes smaller than an intended value. In this case, for example, the control section 2 includes an iteration count decision section (not illustrated), and the iteration count decision section decides the iteration count m. The fact that Xᵢ converges in such a manner that |Xᵢ-Xᵢ₋₁|<λ|Xᵢ₋₁-Xᵢ₋₂| is satisfied using λ which is a value less than 1 in step S1 may be determined from the behavior of Xᵢ when i is close to n.

### (Step S213)

In step S213, the function value calculation section 24 calculates a value F(Q,Xₙ₊ₘ) of the function F. In step S213, for the calculation carried out by the function value calculation section 24 in step S213, the calculation process recording section 253 of the differential value calculation section 26 records information necessary for carrying out reverse-mode automatic differentiation. This information is included in the calculation process information CP stored in the storage section 3.

In step S214, the back propagation calculation section 252 of the differential value calculation section 26 carries out, based on the calculation process information CP stored in the storage section 3, back propagation calculation of a differential value corresponding to calculation of obtaining Xₙ₊ₘ from Xₙ by an iterative method and further obtaining a value F(Q,Xₙ₊ₘ) of the function F. Thus, ∂F(Q,Y_{(n,m)}(P))/∂pₐ is obtained.

Here, Y_{(n,m)}(P) is newly introduced in order to explicitly show the dependence on P. Y_{(i,0)}(P) is a constant independent of P such that Y_{(i,0)}=Xᵢ(P) is satisfied. Y_{(i,k)}(P) is a state variable obtained by applying φ k times starting from Y_{(i,0)}. For example, Y_{(i,1)}(P)=φ(P,Y_{(i,0)}) is satisfied. For a value P' of a parameter different from P, Y_{(i,1)}(P')=φ(P',Y_{(i,0)}) is satisfied. However, in this case also, Y_{(i,0)} on the right-hand side is Y_{(i,0)}=Xᵢ(P). Although Y_{(i,k)}(P)=Xᵢ₊ₖ(P) is satisfied, generally Y_{(i,k)}(P')≠Xᵢ₊ₖ(P') is satisfied for a value P' of a parameter different from P and k>0.

As can be seen from the above description, the first process includes a first iteration of a process iterated in the first iterative process.

Thus, in step S2, reverse-mode automatic differentiation is applied to the calculation carried out in steps S211 through S213 to obtain Xₙ₊ₘ from Xₙ by the iterative method and further obtain the value F(Q,Xₙ₊ₘ) of the function F. Thus, for each pₐ included in P, ∂F(Q,Y_{(n,m)}(P))/∂pₐ is obtained as a numerical value of ∂F(Q,X_{ANS}(P))/∂pₐ. As can be seen from the above description, the application target of the automatic differentiation at least partially includes calculation of obtaining the state variable X by calculation depending on the parameter, and the differential coefficient obtained by the automatic differentiation includes a contribution in which the target function F depends on the parameter P via the one or more state variables X. Further, as can be seen from the above description, the automatic differentiation is applied to a process that includes step S211 which is a process iterated at least once and that does not include step S12 which is a process iterated at least once.

In the present embodiment, since the calculation of step S1 is carried out before step S2, for example, the iteration count m in step S2 can be reduced, and the calculation cost of the automatic differentiation for obtaining the differential coefficient of F with respect to each pₐ can be reduced. This effect is large when a ratio n/m of the iteration count n in step S1 to the iteration count m in step S2 is large.

By using the reverse-mode automatic differentiation in step S2, ∂F(Q,Y_{(n,m)}(P))/∂pₐ can be calculated while suppressing the calculation cost even in a case where the number of pₐ is large.

As described above, in the information processing device 1 and the information processing method in accordance with the present embodiment,
- an initial value related to calculation of a value of a target function (F) including one or more parameters (pₐ) directly or indirectly as arguments is acquired,
- a differential coefficient of the target function (F) is calculated, and
- the differential coefficient calculation process includes
   a first process (e.g., step S1) and
   a second process (e.g., steps S211 and S212).
Further, the following configuration is adopted:
- the differential coefficient calculation process includes an iterative process,
   the first process includes a part of the iterative process,
   the second process includes a part of the iterative process other than the above part, and
   the differential coefficient calculation process includes a third process that is a calculation process of automatic differentiation applied to a process which does not include the first process and which includes the second process.
Therefore, according to the above configuration, in the calculation for obtaining the differential coefficient of the target function (F) with respect to each parameter (pₐ), the calculation cost can be reduced while keeping the accuracy of the differential calculation high by using the automatic differentiation.

Further, as described above, the second process includes a process of calculating the differential coefficient of the target function (F) by using back propagation automatic differentiation. Therefore, the calculation cost can be more suitably reduced.

### (Additional remarks of Embodiment 1)

Each process described in Embodiment 1 and each process described in each embodiment described later can also be regarded as a process based on a comparative example described below. Fig. 5 is a flowchart illustrating an information processing method in accordance with the comparative example.

The information processing method in accordance with the comparative example includes step S1010, step S1020, and step S1030.

### (Step S1010)

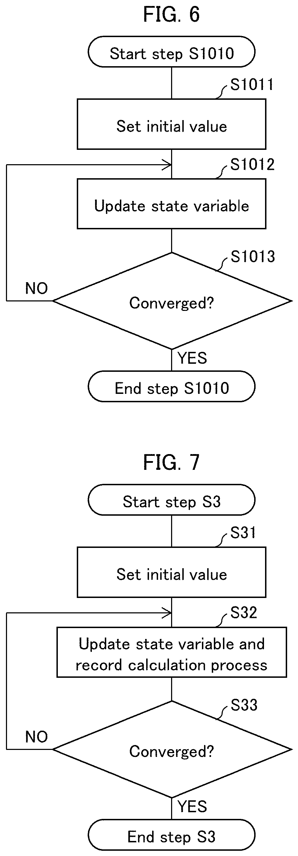

First, step S1010 is carried out. Fig. 6 is a flowchart illustrating a flow of each process included in step S1010. As illustrated in Fig. 6, step S1010 includes steps S1011 through S1013.

### (Step S1011)

In step S1011, an initial value X₀ of a state variable X is set.

### (Step S1012)

Next, in step S1012, a new value Xᵢ of the state variable is obtained using Xᵢ=φ(P,Xᵢ₋₁). Here, i corresponds to the iteration number of step S1012. For example, in a case where step S1012 is executed for the first time, X₁ is obtained using X₁=φ(P,X₀).

### (Step S1013)

Next, in step S1013, it is determined whether Xᵢ satisfies a convergence condition. In a case where it is determined that Xᵢ does not satisfy the convergence condition, step S1013 is executed again. In a case where it is determined that Xᵢ satisfies the convergence condition, step S1012 is executed.

The convergence condition in step S1013 relates to, for example, a degree to which Xᵢ and Xᵢ₋₁ differ from each other, and is, for example, similar to that described in other embodiments.

In a case where it is determined in step S1013 that Xᵢ satisfies the convergence condition, Xₙ is obtained as a numerical solution of X_{ANS}(P). However, here, n is i when it is determined that Xᵢ satisfies the convergence condition. Xₙ obtained by applying φ n times starting from X₀ depends on P, and is therefore also expressed as Xₙ(P) in order to explicitly show the dependence on P.

### (Step S1020)

In a case where it is determined that Xᵢ satisfies the convergence condition, next, in step S1020, F(Q,Xₙ) is calculated.

### (Step S1030)

Next, in step S1030, back propagation calculation of a differential value of F corresponding to the calculation of step S1010 and step S1020 is carried out. Thus, ∂F(Q,Xₙ(P))/∂pₐ is obtained.

Thus, by applying the automatic differentiation to the calculation of step S1010 and step S1020, ∂F(Q,Xₙ(P))/∂pₐ is obtained as a numerical solution of the differential coefficient ∂F(Q,X_{ANS}(P))/∂pₐ of F(Q,X_{ANS}(P)) with respect to each pₐ included in P. In the above description, ∂F(Q,Xₙ(P))/∂pₐ is obtained by the reverse-mode automatic differentiation. Note, however, that forward-mode automatic differentiation may be used.

In a case where the forward-mode automatic differentiation is used, for example, the differential coefficient ∂F(Q,X_{ANS}(P))/∂pₐ for each pₐ may be calculated by carrying out the calculation of step S1010 and step S1020 once using an extended dual number having a plurality of non-real parts.

In a case where the reverse-mode automatic differentiation is used, the differential coefficient ∂F(Q,X_{ANS}(P))/∂pₐ can be collectively calculated for each pₐ by carrying out back propagation calculation of the differential coefficient.

### Embodiment 2

Next, Embodiment 2, which is another embodiment of the present invention, will be described in detail. For convenience of explanation, members having the same functions as the members described in the above embodiment are denoted by the same reference numerals, and description thereof will not be repeated.

An information processing device in accordance with the present embodiment includes a differential value calculation section 25 instead of the differential value calculation section 26 included in the information processing device 1 in accordance with Embodiment 1 described above. Other configurations of the information processing device in accordance with the present embodiment are similar to those of the information processing device 1 in accordance with Embodiment 1 described above.

### (Differential value calculation section 25)

The differential value calculation section 25 includes, for example, a forward propagation calculation section 251. The forward propagation calculation section 251 of the differential value calculation section 25 carries out forward propagation calculation, corresponding to calculation carried out by the state update section 22, of a differential value. Details of the process carried out by the differential value calculation section 25 will be described later.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device 1 in accordance with Embodiment 1:
- a convergent solution calculation step (step S1, also referred to as a first process); and
- a process S2b step (step S2b).

Step S2b includes step S201, step S202, and step S203, as will be described later. A part of processes carried out in step S201 and step S202 is also referred to as a second process. A process carried out by the forward propagation calculation section 251 in step S201 and step S203 is an example of a process included in a third process.

### (Step S1)

Step S1 in accordance with the present embodiment is similar to step S1 executed by the information processing device 1 in accordance with Embodiment 1, and therefore description thereof is omitted.

### (Step S2b)

After the end of step S1, step S2b is carried out. Step S2b in accordance with the present embodiment includes, for example, step S201, step S202, and step S203 described below.

### (Step S201)

In step S201, the state update section 22 obtains Xₙ₊ₖ using Xₙ₊ₖ=φ(P,Xₙ₊ₖ₋₁). Here, k corresponds to the iteration number of step S201. For example, in a case where step S201 is executed for the first time, the state update section 22 obtains Xₙ₊₁ using Xₙ₊₁=φ(P,Xₙ). Note that Xₙ is Xₙ obtained in step S1.

In step S201, the forward propagation calculation section 251 of the differential value calculation section 25 carries out forward propagation (forward-mode) calculation, corresponding to calculation carried out by the state update section 22 in step S201, of a differential value.

### (Step S202)

Subsequently, in step S202, the end determination section 28 determines whether step S201 has been executed a predetermined number of times. In a case where step S201 has been executed the predetermined number of times, step S203 is executed. In a case where step S201 has not been executed the predetermined number of times, step S201 is executed again. Assuming that the predetermined number of times step S201 is executed is m, Xₙ₊ₘ is obtained by executing step S201 m times.

### (Step S203)

Subsequently, in step S203, the function value calculation section 24 calculates a value F(Q,Xₙ₊ₘ) of the function F.

In step S203, the forward propagation calculation section 251 of the differential value calculation section 25 carries out forward propagation calculation, corresponding to calculation carried out by the function value calculation section 24 in step S203, of a differential value.

By applying forward-mode automatic differentiation to calculation which is carried out in step S2b to obtain Xₙ₊ₘ from Xₙ by an iterative method and further obtain a value F(Q,Xₙ₊ₘ) of a target function, ∂F(Q,Y_{(n,m)}(P))/∂pₐ is obtained, for each pₐ included in P, as a numerical value of a differential coefficient ∂F(Q,X_{ANS}(P))/∂pₐ of F with respect to pₐ. Here, Y_{(n,m)}(P) is similar to Y_{(n,m)}(P) introduced in Embodiment 1.

After the end of step S2b, the information processing device in accordance with the present embodiment, for example, outputs ∂F(Q,Y_{(n,m)}(P))/∂pₐ with respect to each pₐ to the outside via the input-output section 4.

In a case where forward-mode automatic differentiation is used as in the present embodiment, obtaining the differential coefficient of F with respect to each pₐ takes a calculation cost which is, for example, approximately proportional to the number of pₐ. In the present embodiment, automatic differentiation for obtaining the differential coefficient of F with respect to each pₐ is not applied to step S1. Since step S1 is carried out, for example, the iteration count m in step S2b can be reduced, and the calculation cost of automatic differentiation for obtaining the differential coefficient of F with respect to each pₐ can be reduced as compared with the comparative example. This effect is large in a case where a ratio n/m of the iteration count n in step S1 to the iteration count m in step S2b is large. Note that a manner of setting the iteration count m is similar to, for example, the process described in Embodiment 1, and therefore description thereof is omitted here.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

### Embodiment 3

Next, Embodiment 3, which is another embodiment of the present invention, will be described in detail. For convenience of explanation, members having the same functions as the members described in the above embodiments are denoted by the same reference numerals, and description thereof will not be repeated.

An information processing device in accordance with the present embodiment includes an end determination section 29 instead of the end determination section 28 included in the information processing device in accordance with Embodiment 2 described above. Further, a storage section 3 of the information processing device in accordance with the present embodiment stores a threshold value Cth2 instead of the iteration count m in Embodiment 2. Other configurations of the information processing device in accordance with the present embodiment are similar to those of the information processing device in accordance with Embodiment 2 described above.

### (End determination section 29)

The end determination section 29 determines whether a target process satisfies a convergence condition. Details of the process carried out by the end determination section 29 will be described later.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device 2 in accordance with Embodiment 2:
- a convergent solution calculation step (step S1, also referred to as a first process); and
- a process S2c step (also referred to as step S2c).

Step S2c includes step S201, step S203, and step S205, as will be described later. A part of processes carried out in step S2c is also referred to as a second process. A process carried out by the forward propagation calculation section 251 in step S201 and step S203 is an example of a process included in a third process.

### (Step S1)

Step S1 in accordance with the present embodiment is similar to step S1 executed by the information processing device 1 in accordance with Embodiment 1, and therefore description thereof is omitted.

### (Step S2c)

After the end of step S1, step S2c is carried out. Step S2c in accordance with the present embodiment includes, for example, step S201, step S203, and step S205 described below.

### (Step S201)

In step S201, the state update section 22 obtains Xₙ₊ₖ using Xₙ₊ₖ=φ(P,Xₙ₊ₖ₋₁). Here, k corresponds to the iteration number of step S201. For example, in a case where step S201 is executed for the first time, the state update section 22 obtains Xₙ₊₁ using Xₙ₊₁=φ(P,Xₙ). Note that Xₙ is Xₙ obtained in step S1. In step S201, the forward propagation calculation section 251 of the differential value calculation section 25 carries out forward propagation calculation, corresponding to calculation carried out by the state update section 22 in step S201, of a differential value.

### (Step S203)

Subsequently, in step S203, the function value calculation section 24 calculates a value F(Q,Xₙ₊ₖ) of the function F.

In step S203, the forward propagation calculation section 251 of the differential value calculation section 25 carries out forward propagation calculation, corresponding to calculation carried out by the function value calculation section 24 in step S203, of a differential value.

By applying forward-mode automatic differentiation to calculation in which step S201 is repeatedly executed to obtain Xₙ₊ₖ based on Xₙ and, in step S203, a value F(Q,Xₙ₊ₖ) of the function F is calculated, a differential coefficient ∂F(Q,Y_{(n,k)}(P))/∂pₐ with respect to each parameter pₐ is obtained. Here, Y_{(n,k)} is similar to Y introduced in Embodiment 1.

### (Step S205)

Next, in step S205, the end determination section 29 determines whether ∂F(Q,Y_{(n,k)}(P))/∂pₐ satisfies a convergence condition. In other words, the end determination section 29 executes a convergence determination process for the differential coefficient of the target function (F). In a case where ∂F(Q,Y_{(n,k)}(P))/∂pₐ is determined to satisfy the convergence condition, step S2c ends. In this case, ∂F(Q,Y_{(n,k)}(P))/∂pₐ determined to satisfy the convergence condition is a numerical solution of ∂F(Q,X_{ANS}(P))/∂pₐ. In a case where ∂F(Q,Y_{(n,k)}(P))/∂pₐ is determined not to satisfy the convergence condition, step S201 is executed again.

A method by which the end determination section 29 determines, in step S205, whether ∂F(Q,Y_{(n,k)}(P))/∂pₐ has converged may be appropriately set according to the purpose. For example, in a case where (Σₐ(g_{(k,a)}-g_{(k-1,a)})²)^{0.5}<Cth2 is satisfied where g_{(k,a)}=∂F(Q,Y_{(n,k)}(P))/∂pₐ, ∂F(Q,Y_{(n,k)}(P))/∂pₐ is determined to have converged, and otherwise ∂F(Q,Y_{(n,k)}(P))/∂pₐ is determined not to have converged.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

### Embodiment 4

Next, Embodiment 4, which is another embodiment of the present invention, will be described in detail. For convenience of explanation, members having the same functions as the members described in the above embodiments are denoted by the same reference numerals, and description thereof will not be repeated.

An information processing device in accordance with the present embodiment includes an end determination section 29 instead of the end determination section 28 included in the information processing device 1 in accordance with Embodiment 1 described above. Further, a storage section 3 of the information processing device in accordance with the present embodiment stores a threshold value Cth2 instead of the iteration count m in Embodiment 1. Other configurations of the information processing device in accordance with the present embodiment are similar to those of the information processing device 1 in accordance with Embodiment 1 described above.

### (End determination section 29)

The end determination section 29 determines whether a target process satisfies a convergence condition. Details of the process carried out by the end determination section 29 will be described later.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device 1 in accordance with Embodiment 1:
- a convergent solution calculation step (step S1, also referred to as a first process); and
- a process S2d step (step S2d).

Step S2d includes step S211, step S213, step S214, and step S205, as will be described later. S211 and step S213 are also referred to as a second process. Step S214 and step S205 are examples of processes included in a third process.

### (Step S1)

Step S1 in accordance with the present embodiment is similar to step S1 executed by the information processing device 1 in accordance with Embodiment 1, and therefore description thereof is omitted.

### (Step S2d)

After the end of step S1, step S2d is carried out. Step S2d in accordance with the present embodiment includes, for example, step S211, step S213, step S214, and step S205 described below.

### (Step S211)

In step S211, the state update section 22 obtains Xₙ₊ₖ using Xₙ₊ₖ=φ(P,Xₙ₊ₖ₋₁). In step S211, for the calculation carried out by the state update section 22 in step S211, the calculation process recording section 253 of the differential value calculation section 26 adds information necessary for carrying out reverse-mode automatic differentiation to the calculation process information CP.

### (Step S213)

Subsequently, in step S213, the function value calculation section 24 calculates a value F(Q,Xₙ₊ₖ) of the function F. In step S213, for the calculation carried out by the function value calculation section 24 in step S213, the calculation process recording section 253 of the differential value calculation section 26 adds information necessary for carrying out reverse-mode automatic differentiation to the calculation process information CP.

### (Step S214)

Subsequently, in step S214, the back propagation calculation section 252 of the differential value calculation section 26 carries out back propagation calculation based on the calculation process information CP stored in the storage section 3. Thus, ∂F(Q,Y_{(n,k)}(P))/∂pₐ is obtained. For example, each time step S214 is carried out, the back propagation calculation section 252 carries out back propagation calculation corresponding to the entirety of calculation of obtaining Xₙ₊ₖ by iterative calculation starting from Xₙ, and then obtaining F(Q,Xₙ₊ₖ).

### (Step S205)

Subsequently, in step S205, the end determination section 29 determines whether ∂F(Q,Y_{(n,k)}(P))/∂pₐ satisfies a convergence condition. In other words, the end determination section 29 executes a convergence determination process for the differential coefficient of the target function (F). In a case where ∂F(Q,Y_{(n,k)}(P))/∂pₐ is determined to satisfy the convergence condition, step S2d ends. In this case, ∂F(Q,Y_{(n,k)}(P))/∂pₐ determined to satisfy the convergence condition is a numerical solution of ∂F(Q,X_{ANS}(P))/∂pₐ. In a case where ∂F(Q,Y_{(n,k)}(P))/∂pₐ is determined not to satisfy the convergence condition, step S211 is executed again. In step S205, a method by which the end determination section 29 determines whether ∂F(Q,Y_{(n,k)}(P))/∂pₐ satisfies the convergence condition is similar to, for example, the method described in Embodiment 3.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

Further, as described above, the third process includes a process of calculating the differential coefficient of the target function (F) by using reverse-mode automatic differentiation. Therefore, the calculation cost can be more suitably reduced.

### Embodiment 5

Next, Embodiment 5, which is another embodiment of the present invention, will be described in detail. For convenience of explanation, members having the same functions as the members described in the above embodiments are denoted by the same reference numerals, and description thereof will not be repeated.

The information processing device in accordance with the present embodiment is similar to the information processing device in accordance with Embodiment 2 described above.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device 2 in accordance with Embodiment 2:
- a convergent solution calculation step (also referred to as step S1), and
- a process S2e step (also referred to as step S2e).

### (Step S1)

Step S1 in accordance with the present embodiment is similar to step S1 executed by the information processing device 1 in accordance with Embodiment 1, and therefore description thereof is omitted.

### (Step S2e)

After the end of step S1, step S2e is carried out. Step S2e in accordance with the present embodiment includes, for example, step S201e, step S202, and step S203 described below.

### (Step S201e)

In step S201e, the state update section 22 obtains Xₙ₋ₘ₊ₖ using Xₙ₋ₘ₊ₖ=φ(P,Xₙ₋ₘ₊ₖ₋₁). Here, k corresponds to the iteration number of step S201e. For example, in a case where step S201e is executed for the first time, the state update section 22 obtains Xₙ₋ₘ₊₁ using Xₙ₋ₘ₊₁=φ(P,Xₙ₋ₘ). Note that Xₙ₋ₘ is Xₙ₋ₘ obtained in step S1 and is Xᵢ when i=n-m is satisfied. Further, m is the iteration count m stored in the storage section 3.

The value of n and the value of n-m are unknown until step S1 ends. Therefore, for example, each Xᵢ obtained every time step S12 is executed is added to the calculation process information CP in step S1, and Xₙ₋ₘ stored in the calculation process information CP is used in step S201e. Alternatively, before execution of step S2e, step S1 may be re-executed from the beginning to a middle point and Xₙ₋ₘ may be calculated again. In this case, the storage section 3 does not need to store each Xᵢ.

In step S201e, the forward propagation calculation section 251 of the differential value calculation section 25 carries out forward propagation calculation, corresponding to calculation carried out by the state update section 22 in step S201e, of a differential value.

### (Step S202)

Subsequently, in step S202, the end determination section 28 determines whether step S201e has been executed a predetermined number of times. In a case where step S201e has been executed the predetermined number of times, step S203 is executed. In a case where step S201e has not been executed the predetermined number of times, step S201e is executed again. Assuming that the predetermined number of times step S201e is executed is m, Xₙ is obtained again by executing step S201e m times.

### (Step S203)

Subsequently, in step S203, the function value calculation section 24 calculates a value F(Q,Xₙ) of the function F. In step S203, the forward propagation calculation section 251 of the differential value calculation section 25 carries out forward propagation calculation, corresponding to calculation carried out by the function value calculation section 24 in step S203, of a differential value.

As described above, for each pₐ included in P, ∂F(Q,Y_{(n-m,m)}(P))/∂pₐ is obtained as a numerical value of the differential coefficient ∂F(Q,X_{ANS}(P))/∂pₐ of F with respect to pₐ. Note that the iteration count m in step S2e is set similarly to, for example, the case of Embodiment 1. Further, the iteration count m is set so as to satisfy m<n. This can reduce the cost for obtaining ∂F(Q,Y_{(n-m,m)}(P))/∂pₐ by automatic differentiation as compared with the comparative example. Among the processes carried out in step S1, a process in which, starting from X₀, φ is repeatedly applied until Xₙ₋ₘ is obtained is also referred to as a first process. A process up to obtainment of Xₙ from Xₙ₋ₘ among the processes carried out in step S1 or a part of the process in step S201e is also referred to as a second process. A process carried out by the forward propagation calculation section 251 in step S201e is an example of a process included in a third process.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

### Embodiment 6

Next, Embodiment 6, which is another embodiment of the present invention, will be described in detail. For convenience of explanation, members having the same functions as the members described in the above embodiments are denoted by the same reference numerals, and description thereof will not be repeated.

The information processing device in accordance with the present embodiment is similar to the information processing device 1 in accordance with Embodiment 1 described above.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device 1 in accordance with Embodiment 1:
- a convergent solution calculation step (also referred to as step S3), and
- a process S4 step (also referred to as step S4).

### (Step S3)

Step S3 includes, for example, step S31, step S32, and step S33 as illustrated in Fig. 7.

### (Step S31)

In step S31, the initial value decision section 21 sets the initial value X₀ of the state variable X.

### (Step S32)

Next, in step S32, the state update section 22 updates the state variable X. That is, Xᵢ which is a new value of the state variable X is obtained using Xᵢ=φ(P,Xᵢ₋₁). Here, i corresponds to the iteration number of step S32. For example, in a case where step S32 is executed for the first time, the state update section 22 obtains X₁ using X₁=φ(P,X₀). This step S32 can be expressed as constituting at least a part of a process of obtaining, by an iterative process (first iterative process), a numerical solution of the state variable X taking the parameter P as an argument.

In step S32, for the calculation carried out by the state update section 22 in step S32, the calculation process recording section 253 records information necessary for carrying out reverse-mode automatic differentiation. The information necessary for carrying out reverse-mode automatic differentiation may be recorded in the form of, for example, a calculation graph, or each Xᵢ may be recorded as checkpoint information and a calculation graph may be configured using Xᵢ as necessary when back propagation calculation is carried out in step S414 described later.

### (Step S33)

Next, in step S33, the end determination section 23 determines whether to end the iteration of the calculation in step S32. A method by which the end determination section 23 determines, in step S33, whether to end the iteration of the calculation in step S32 may be similar to the case of Embodiment 1.

### (Step S4)

Step S4 in accordance with the present embodiment includes, for example, step S413 and step S414 described below.

### (Step S413)

In step S413, the function value calculation section 24 calculates a value F(Q,Xₙ) of the function F. In step S413, for the calculation carried out by the function value calculation section 24 in step S213, the calculation process recording section 253 of the differential value calculation section 26 adds information necessary for carrying out reverse-mode automatic differentiation to the calculation process information CP.

### (Step S414)

Subsequently, in step S414, the back propagation calculation section 252 of the differential value calculation section 26 carries out, based on the calculation process information CP stored in the storage section 3, back propagation calculation corresponding to the calculation of step S32 from the (n-m+1)th time to the n-th time and the calculation of step S413. Thus, ∂F(Q,Y_{(n-m,m)}(P))/∂pₐ is obtained.

m in step S4 is set similarly to, for example, m in step S2e of Embodiment 5. Further, the iteration count m is set so as to satisfy m<n. This can reduce the cost for obtaining ∂F(Q,Y_{(n-m,m)}(P))/∂pₐ by automatic differentiation as compared with the comparative example. Further, by using reverse-mode automatic differentiation, ∂F(Q,Y_{(n-m,m)}(P))/∂pₐ can be obtained for each pₐ while suppressing the cost even in a case where the number of pₐ is large. Among the processes carried out in step S3, a process in which, starting from X₀, φ is repeatedly applied until Xₙ₋ₘ is obtained is also referred to as a first process. Among the processes carried out in step S3, a process up to obtainment of Xₙ from Xₙ₋ₘ is also referred to as a second process. Step S413 may be included in the second process. Step S414 is also referred to as a third process.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

Further, as described above, the third process includes a process of calculating the differential coefficient of the target function (F) by using reverse-mode automatic differentiation. Therefore, the calculation cost can be more suitably reduced.

### Embodiment 7

Next, Embodiment 7, which is another embodiment of the present invention, will be described in detail. For convenience of explanation, members having the same functions as the members described in the above embodiments are denoted by the same reference numerals, and description thereof will not be repeated.

The information processing device in accordance with the present embodiment further includes an end determination section 29 in addition to the components included in the information processing device of Embodiment 2. Further, a storage section 3 of the information processing device in accordance with the present embodiment stores a threshold value Cth2 instead of the iteration count m. Other configurations of the information processing device in accordance with the present embodiment are similar to those of the information processing device in accordance with Embodiment 2.

### <Flow of processing by information processing device in accordance with present embodiment>

The following description will discuss a flow of processing by the information processing device in accordance with the present embodiment. As an outline, the information processing device in accordance with the present embodiment carries out, similarly to the information processing device in accordance with Embodiment 2:
- a convergent solution calculation step (also referred to as step S1), and
- a process S2g step (also referred to as step S2g).

### (Step S1)

Step S1 in accordance with the present embodiment is similar to step S1 executed by the information processing device 1 in accordance with Embodiment 1, and therefore description thereof is omitted.

### (Step S2g)

After the end of step S1, step S2g is carried out. Step S2g in accordance with the present embodiment includes step S200g, step S201g, step S202, step S203, and step S205g described below.

### (Step S200g)

In step S200g, an initial state for calculation of a differential coefficient is set. In a case where step S200g is executed for the k-th time, Xₙ₋ₖ is set as the initial state for calculation of the differential coefficient.

### (Step S201g)

In step S201g, the state update section 22 obtains Xₙ₋ₖ₊ₛ, which is a new value of the state variable X, using Xₙ₋ₖ₊ₛ=φ(P,Xₙ₋ₖ₊ₛ₋₁). Here, s corresponds to the iteration number of step S201g after the last executed step S200g.

In step S201g, the forward propagation calculation section 251 carries out forward propagation calculation, corresponding to calculation carried out by the state update section 22 in step S201g, of a differential value.

### (Step S202)

Subsequently, in step S202, the end determination section 28 determines whether step S201g has been executed k times after step S200g. In a case where step S201g has been executed k times after step S200g, step S203 is executed. In a case where step S201g has not been executed k times after step S200g, step S201g is executed again. By executing step S201g k times after step S200g, Xₙ is obtained again from Xₙ₋ₖ, and corresponding forward propagation calculation is carried out.

### (Step S203)

Subsequently, in step S203, the function value calculation section 24 calculates a value F(Q,Xₙ) of the function F. In step S203, the forward propagation calculation section 251 carries out forward propagation calculation, corresponding to calculation carried out by the function value calculation section 24 in step S203, of a differential value. Thus, ∂F(Q,Y_{(n-k,k)}(P))/∂pₐ is obtained as a candidate for a numerical value of the differential coefficient ∂F(Q,X_{ANS}(P))/∂pₐ of F with respect to each pₐ.

### (Step S205g)

Next, in step S205g, the end determination section 29 determines whether ∂F(Q,Y_{(n-k,k)}(P))/∂pₐ satisfies a convergence condition. In other words, the end determination section 29 executes a convergence determination process for the derivative of the target function (F). In a case where ∂F(Q,Y_{(n-k,k)}(P))/∂pₐ is determined to satisfy the convergence condition, step S2g ends. In this case, ∂F(Q,Y_{(n-k,k)}(P))/∂pₐ determined to satisfy the convergence condition is a numerical solution of ∂F(Q,X_{ANS}(P))/∂pₐ. In a case where ∂F(Q,Y_{(n-k,k)}(P))/∂pₐ is determined not to satisfy the convergence condition, step S200g is executed again.

A method of determining, in step S205g, whether ∂F(Q,Y_{(n-k,k)}(P))/∂pₐ satisfies the convergence condition may be appropriately set according to the purpose. For example, in a case where (Σₐ(g_{(n-k,k)}-g_{(n-k+1,k+1)})²)^{0.5}<Cth2 is satisfied where g_{(n-k,a)}=∂F(Q,Y_{(n-k,k)}(P))/∂pₐ, ∂F(Q,Y_{(n-k,k)}(P))/∂pₐ is determined to have converged, and otherwise ∂F(Q,Y_{(n-k,k)}(P))/∂pₐ is determined not to have converged.

Let m be k when ∂F(Q,Y_{(n-k,k)}(P))/∂pₐ is determined to satisfy the convergence condition in step S205g. m is expected to be smaller than n. In a case where m is smaller than n, a numerical solution of ∂F(Q,X_{ANS}(P))/∂pₐ can be obtained while suppressing the calculation cost as compared with the comparative example. Among the processes carried out in step S1, a process in which, starting from X₀, φ is repeatedly applied until Xₙ₋ₘ is obtained is also referred to as a first process. A process up to obtainment of Xₙ from Xₙ₋ₘ among the processes carried out in step S1 or a part of the process in step S2g is also referred to as a second process. A process carried out by the forward propagation calculation section 251 in step S2g is an example of a process included in a third process.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

### Embodiment 8

Next, Embodiment 8, which is another embodiment of the present invention, will be described in detail. For convenience of explanation, members having the same functions as the members described in the above embodiments are denoted by the same reference numerals, and description thereof will not be repeated.

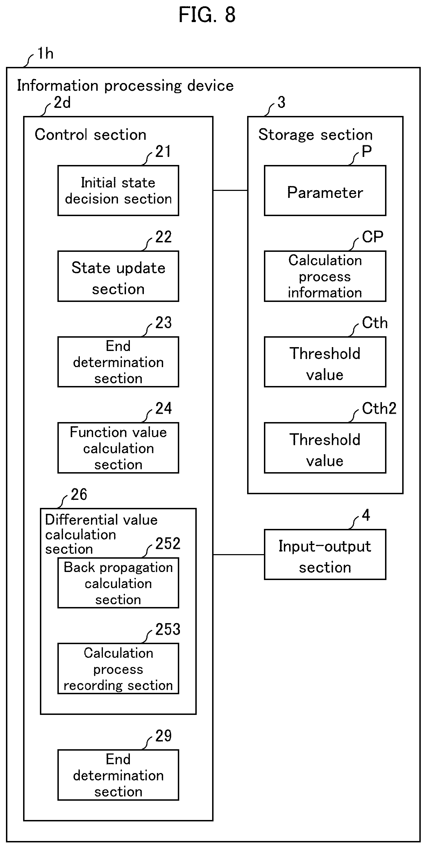

Fig. 8 is a block diagram illustrating a configuration of an information processing device 1h in accordance with the present embodiment. The configuration of the information processing device 1h is similar to the configuration of the information processing device in accordance with Embodiment 4.

<Flow of processing by information processing device in accordance with present embodiment>

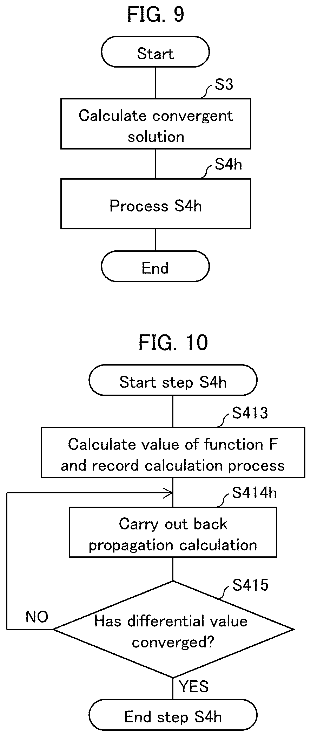

The following description will discuss a flow of processing by the information processing device in accordance with the present embodiment. Fig. 9 is a flowchart illustrating the information processing method in accordance with the present embodiment. As an outline, as illustrated in Fig. 9, the information processing device in accordance with the present embodiment carries out, similarly to the information processing device in accordance with Embodiment 1:
- a convergent solution calculation step (also referred to as step S3), and
- a process S4h step (also referred to as step S4h).

### (Step S3)

Step S3 is similar to step S3 of Embodiment 6, and therefore description thereof is omitted here.

### (Step S4h)

Step S4h includes step S413, step S414h, and step S415, as illustrated in Fig. 10.

### (Step S413)

Step S413 is similar to step S413 of Embodiment 6.

### (Step S414h)

Subsequently, in step S414h, the back propagation calculation section 252 carries out back propagation calculation with respect to a differential value. The back propagation calculation is carried out based on information of calculation processes added to the calculation process information CP in step S3 and step S413.

In a case where step S414h is executed for the k-th time, ∂F(Q,Y_{(n-k,k)}(P))/∂pₐ is obtained as a candidate for a numerical value of ∂F(Q,X_{ANS}(P))/∂pₐ by carrying out back propagation calculation related to calculation in which, starting from Xₙ₋ₖ, φ is applied k times to obtain Xₙ, and F(Q,Xₙ) is calculated. Note that the calculation in which, starting from Xₙ₋ₖ, φ is applied k times to obtain Xₙ is a part of the calculation carried out in step S3.

As can be seen from the above description, the first process includes a first iteration of a process iterated in the first iterative process.

In a case where step S414h is executed for the k-th time, a calculation result obtained when step S414f was executed for the (k-1)th time can be used. For example, calculation may be carried out only for a portion for which additional calculation is needed with respect to the calculation carried out when step S414f was executed for the (k-1)th time.

As can be seen from the above description, the application target of the automatic differentiation at least partially includes calculation of obtaining the state variable X by calculation depending on the parameter, and the differential coefficient obtained by the automatic differentiation includes a contribution in which the target function F depends on the parameter P via the one or more state variables X.

### (Step S415)

Subsequently, in step S415, the end determination section 29 determines whether ∂F(Q,Y_{(n-k,k)}(P))/∂pₐ satisfies a convergence condition. In other words, the end determination section 29 executes a convergence determination process for the derivative of the target function (F). A method of determining whether the convergence condition is satisfied in step S415 is similar to, for example, step S205g of Embodiment 7.

In a case where ∂F(Q,Y_{(n-k,k)}(P))/∂pₐ is determined to satisfy the convergence condition in step S415, step S4h ends. In a case where ∂F(Q,Y_{(n-k,k)}(P))/∂pₐ is determined not to satisfy the convergence condition in step S415, S414h is executed again.

Let m be k when ∂F(Q,Y_{(n-k,k)}(P))/∂pₐ is determined to satisfy the convergence condition in step S415. m is expected to be smaller than n. In a case where m is smaller than n, a numerical solution of ∂F(Q,X_{ANS}(P))/∂pₐ can be obtained while suppressing the calculation cost as compared with the comparative example. Among the processes carried out in step S3, a process in which, starting from X₀, φ is repeatedly applied until Xₙ₋ₘ is obtained is also referred to as a first process. Among the processes carried out in step S3, a process up to obtainment of Xₙ from Xₙ₋ₘ is also referred to as a second process. Step S413 may be included in the second process. Step S414h and step S415 are also referred to as a third process. Thus, in the present embodiment, the third process includes a calculation process of automatic differentiation with respect to the process including the second process and a convergence determination process related to the differential coefficient of the target function F.

Also with the information processing device and the information processing method in accordance with the present embodiment, in calculation for obtaining the differential coefficient of the target function (F) with respect to each parameter (pₐ), a calculation cost can be reduced while keeping the accuracy of differential calculation high by using automatic differentiation.

Further, as described above, the third process includes a process of calculating the differential coefficient of the target function (F) by using reverse-mode automatic differentiation. Therefore, the calculation cost can be more suitably reduced.

### Embodiment 9

In Embodiments 1 through 8, Xᵢ is obtained from Xᵢ₋₁ using Xᵢ=φ(P,Xᵢ₋₁). For a purpose such as accelerating or improving convergence, a known method may be employed. For example, mixing may be used to obtain a new state variable.

For example, simple mixing is used in a case as follows. Assuming that Xᵢ'=φ(P,Xᵢ₋₁) is satisfied and each state variable included in Xᵢ' is x'_{b}, each state variable x_{(i,b)} included in Xᵢ is set, with respect to each b, using x_{(i,b)}=αx'_{(i,b)}+(1-α)x_{(i-1,b)} with a predetermined α. Here, α is, for example, a weight coefficient not less than 0 and not more than 1. In other words, in the information processing method described in each embodiment,
- a new state variable may be derived from the state variable Xᵢ₋₁ using Xᵢ'=φ(P,Xᵢ₋₁), and
- the state variable Xᵢ may be derived from an average or weighted average of the new state variable Xᵢ' and the (original) state variable Xᵢ₋₁. Note that, in the present embodiment, Anderson mixing, Broyden mixing, or the like may be used instead of simple mixing.

### Embodiment 10

In Embodiments 1 through 9, the information processing device obtains a value of a first derivative of F with respect to pₐ. Note, however, that a value of a second or higher derivative may be further obtained. In other words, the second process described in each embodiment may include a process of calculating a value of a second or higher derivative related to the target function (F) by using automatic differentiation. For example, ∂²F/∂pₐ₀∂pₐ₁ may be obtained with respect to each a0 and each a1. Here, a0 and a1 are indexes enumerating parameters included in P.

### Embodiment 11

In Embodiments 1 through 9, the information processing device obtains a differential value of F with respect to pₐ. In the present embodiment, application targets of the information processing methods of Embodiments 1 through 10 will be described.

### <Application target 1>

The information processing methods of Embodiments 1 through 10 are applied to, for example, first-principles electronic state calculation. In first-principles electronic state calculation, an electronic state is calculated based on a Hamiltonian represented by an equation shown below. $\hat{H} Ψ = \left[\hat{T}+\hat{V}+\hat{U}\right] Ψ = \left[{\sum }_{i = 1}^{N} \left(-\frac{{ℏ}^{2}}{2 {m}_{i}}{∇}_{i}^{2}\right) + {\sum }_{i = 1}^{N} V \left({r}_{i}\right)+{\sum }_{i < j}^{N} U \left({r}_{i}, {r}_{j}\right)\right] Ψ = E Ψ$ (Equation 1) In the above (Equation 1), H represents a first-principles Hamiltonian, Ψ represents a wave function, T represents kinetic energy, V represents a potential between an atom and an electron, U represents electron-electron interaction, and E represents energy. rᵢ and rⱼ are electron positions. Dependence of the Hamiltonian on atomic positions is included in the functional form of V(rᵢ).

In first-principles electronic state calculation, for example, an electronic state is iteratively updated using a Hartree-Fock approximation method or a density functional method, and an electronic state in a ground state or at a finite temperature is calculated. In this case, the state variable X is, for example, a set of variables specifying an electronic state. The state variable X may include a variable specifying an atomic position. φ is a function for updating an electronic state in order to obtain an electronic state in a ground state or at a finite temperature in the Hartree-Fock approximation method or the density functional method.

Although a term corresponding to an external field is not indicated in the equation shown in (Equation 1), any one or more of, for example, a magnetic field, an electric field, an electromagnetic wave, a sound wave, and pressure may be applied as an external field. pₐ is, for example, a parameter describing the applied external field. pₐ may be, for example, temperature. Further, an atomic position may be regarded as a parameter rather than as the state variable X.

The function F corresponds to, for example, any of a superconducting transition temperature, a superconducting gap, thermoelectric efficiency, photovoltaic efficiency, and a linear or nonlinear response (e.g., a Hall coefficient) to an external field (e.g., a magnetic field, an electric field, an electromagnetic wave, a sound wave, or pressure). The storage section 3 stores an equation for calculating a value of the function F based on the electronic state.

### <Application target 2>

Instead of the first-principles Hamiltonian shown in (Equation 1) above, for example, a Hamiltonian of a tight-binding model indicated below may be considered. $\begin{matrix}H = {\sum }_{k μ v} {t}_{k μ v} {c}_{k μ}^{†} {c}_{k v} + {\sum }_{{{k}_{1} {k}_{2} {k}_{3} {k}_{4}}_{μ v ξ λ}} V {{}_{{k}_{1} {k}_{2} {k}_{3} {k}_{4}}}_{μ v ξ λ} {c}_{{k}_{1} μ}^{†} {c}_{{k}_{2} v} {c}_{{k}_{3} ξ}^{†} {c}_{{k}_{4} λ} \\ + {\sum }_{q} {ω}_{q} {a}_{q}^{†} {a}_{q} + {\sum }_{q k μ} {g}_{q} \left({c}_{k + q μ}^{†} {c}_{k μ} {a}_{q} + {c}_{k μ}^{†} {c}_{k + q μ} {a}_{q}^{†}\right)\end{matrix}$ (Equation 2)

In the right-hand side of the equation shown in (Equation 2) above, a first term represents electron hopping, a second term represents electron-electron interaction, a third term represents phonon dispersion, and a fourth term represents electron-phonon interaction. The equation shown in (Equation 2) includes, for example, a case describing a quantum spin system when terms other than the second term on the right-hand side are zero.

In order to calculate a ground state or a finite-temperature state in the Hamiltonian shown in (Equation 2), for example, an electronic state is iteratively updated using a Hartree approximation or a Hartree-Fock approximation method, and an electronic state in the ground state or at the finite temperature is calculated. In this case, the state variable X is, for example, a set of variables specifying an electronic state. φ is a function for updating an electronic state based on the Hartree approximation or the Hartree-Fock approximation method.

In order to calculate a ground state or a finite-temperature state in the Hamiltonian shown in (Equation 2), for example, an electronic state is iteratively updated using a Lanczos method, and an electronic state in the ground state or at the finite temperature is calculated. In this case, the state variable X is, for example, a set of variables specifying an electronic state. φ is, for example, a function for updating an electronic state based on the Lanczos method.

For example, each of t, V, ω, and g (subscripts omitted) in the equation shown in (Equation 2), or a part thereof, corresponds to pₐ. Examples of the function F are similar to those described in <Application target 1>.

In a case where finite-temperature calculation is carried out based on the Lanczos method, a process of obtaining a plurality of Xₙ by iterative calculation starting from a certain initial condition is carried out for a plurality of initial conditions, and an expected value of a physical quantity of a physical system under consideration is calculated by taking an average of physical quantities calculated based on the respective Xₙ. The function F may thus be calculated based on a plurality of Xₙ each obtained by iterative calculation.

### <Application target 3>

The following equation is an equation showing a Hamiltonian indicating interaction between classical spins. $H = {\sum }_{i , j} {J}_{i , j} {S}_{i} {S}_{j}$ (Equation 3)

In the right-hand side of (Equation 3) above, Sᵢ and Sⱼ are vectors representing classical spins. A variable specifying each Sᵢ in, for example, polar coordinates corresponds to x_{b}. For example, in a case where each Sᵢ is given, an operation of newly setting each Sᵢ so as to minimize Σ_{j≠i}JᵢⱼSⱼ corresponds to φ. For example, each Jᵢⱼ corresponds to pₐ. An external magnetic field may be considered in addition to the term shown in (Equation 3), and pₐ may be, for example, a parameter representing the external magnetic field. F corresponds to, for example, magnetization or magnetic susceptibility.

### <Application target 4>

φ may be, for example, for solving a self-consistent equation in weakly coupled analysis in which a plurality of systems that interact with each other are analyzed together. Further, the plurality of systems targeted in the weakly coupled analysis may be systems that represent physically different targets from each other or may be systems that represent different properties of the same physical target.

The weakly coupled analysis is, for example, analysis that combines structural analysis and fluid analysis. Fluid analysis is carried out under a given state of the structure to obtain a new state of the fluid, and a new state of the structure is obtained under the new state of the fluid. A function for obtaining the new state of the fluid and the new state of the structure in this manner corresponds to φ. By repeating this, states of the structure and the fluid that interact with each other are obtained. The parameter pₐ is, for example, a parameter representing a property of the structure, for example, strength. The state variable x_{b} is a variable representing the state of the structure and the state of the fluid. The function F corresponds to, for example, a displacement amount of the structure.

### Embodiment 12

Next, Embodiment 12, which is another embodiment of the present invention, will be described in detail. For convenience of explanation, members having the same functions as the members described in the above embodiments are denoted by the same reference numerals, and description thereof will not be repeated.

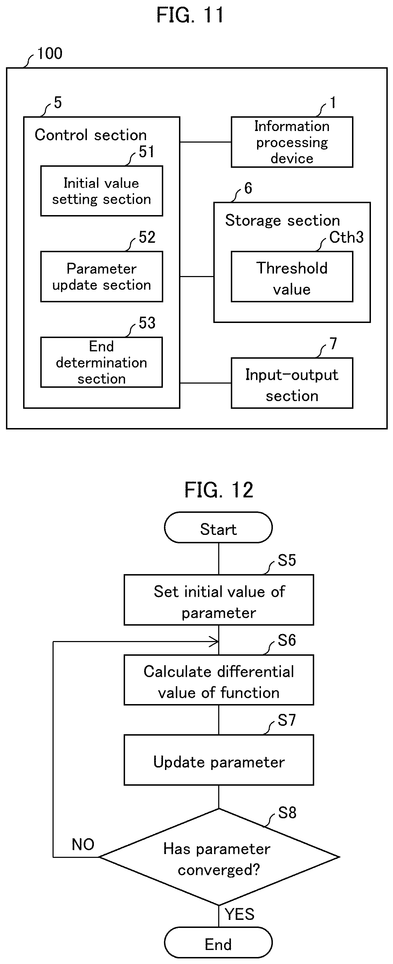

Fig. 11 is a diagram illustrating an information processing device 100 in accordance with the present embodiment. As illustrated in Fig. 11, the information processing device 100 includes the information processing device 1, a control section 5, a storage section 6, and an input-output section 7.

### (Control section 5)

The control section 5 includes an initial value setting section 51, a parameter update section 52, and an end determination section 53. Here, the initial value setting section 51 sets, for example, an initial value of the parameter P. The parameter update section 52 updates, for example, the parameter P. The end determination section 53 determines, for example, whether to end update of the parameter P. Specific processes carried out by sections included in the control section 5 will be described later.

### (Storage section 6, input-output section 7)

The storage section 6 stores, for example, data and information similar to those in the storage section 3 of the information processing device 1. The input-output section 7 has, for example, a configuration similar to that of the input-output section 4 of the information processing device 1.

Note that the information processing device 100 may include, instead of the information processing device 1, the information processing device described in any of Embodiments 2 through 10.

### <Flow of processing by information processing device in accordance with present embodiment>

In Embodiments 1 through 11, a differential value of the function F with respect to each pₐ is calculated. In the present embodiment, the parameter P is optimized using the differential value of the function F with respect to each pₐ. For example, the parameter P that locally maximizes (or globally maximizes) or locally minimizes (or globally minimizes) the function F is obtained. Fig. 12 is a flowchart illustrating the information processing method in accordance with the present embodiment. As illustrated in Fig. 12, the information processing method in accordance with the present embodiment includes steps S5 through S8. Note that an iterative process constituted by steps S6 through S8 illustrated in Fig. 12 is also referred to as a second iterative process. Further, the first iterative process described above corresponds to the process of step S6.

### (Step S5)

First, in step S5, the initial value setting section 51 sets an initial value P₀ of the parameter P. The parameter P₀ may be given randomly, for example, or may be input from the outside via the input-output section.

### (Step S6)

Next, in step S6, the information processing device 1 calculates the differential value of the function F with respect to each pₐ.

### (Step S7)

Next, in step S7, the parameter update section 52 updates the parameter P based on the differential value of the function F with respect to each pₐ calculated in step S6. The parameter update section 52 updates the parameter P by, for example, a steepest descent method. The information processing device 1 may calculate a Hessian of the function F with respect to each pₐ in step S6, and the parameter update section 52 may update the parameter P by a Newton method in step S7. A value of the parameter P obtained when step S7 is executed for the i-th time is hereinafter expressed as Pᵢ. Further, a value of a parameter included in Pᵢ is expressed as p_{(i,a)}. Note that, in step S7, a quasi-Newton method or a conjugate gradient method may be used. Further, the process in this step S7 can also be expressed as a process of updating one or more parameters by using the differential coefficient of the target function F.

### (Step S8)

Next, in step S8, the end determination section 53 determines whether to end update of the parameter P. A condition for determining whether to end update of the parameter P is, for example, a condition related to whether step S7 has been carried out a predetermined number of times or whether the parameter Pᵢ satisfies a convergence condition. For example, in a case where (Σₐ(p_{(i,a)}-p_{(i-1,a)})²)^{0.5}<Cth3 (where Cth3 is a threshold value) is satisfied, the parameter Pᵢ is determined to satisfy the convergence condition, and otherwise the parameter Pᵢ is determined not to satisfy the convergence condition. In a case where the parameter Pᵢ satisfies the convergence condition, the process ends, and otherwise the process returns to step S6. In step S8, instead of determining whether the parameter Pᵢ satisfies the convergence condition, for example, whether the norm of the differential value of the function F obtained in step S6 is smaller than a predetermined threshold value may be determined.

As described above, the information processing device of the present embodiment includes the parameter update section 52 that updates the one or more parameters (pₐ) by using the differential coefficient of the target function. The information processing device of the present embodiment optimizes the one or more parameters through the processes carried out by the parameter update section 52 and the end determination section 53 so as to locally maximize (or globally maximize) or locally minimize (or globally minimize) the value of the target function F. The information processing device of the present embodiment may optimize, for example, the one or more parameters so that the value of the target function F becomes an intended value. Further, the information processing device of the present embodiment may optimize, for example, the one or more parameters by using the differential coefficient of the target function so as to locally maximize (or globally maximize) or locally minimize (or globally minimize) a value of a function G different from the target function, or so that the value of the function G becomes an intended value. A differential value of the function G is calculated using, for example, a differential value of the function F calculated by the method described in any of Embodiments 1 through 11. The function G is, for example, a sum of the function F and a function H different from the function F, and, in that case, a differential value of the function G is calculated as a sum of a differential value of the function F and a differential value of the function H. The derivative of the function H may be calculated by the method described in any of Embodiments 1 through 11 or may be calculated by another method.

### [Software Implementation Example]

The functions of the information processing device in accordance with each embodiment (hereinafter, referred to as "device") can be realized by a program for causing a computer to function as the device, the program causing the computer to function as the control blocks (particularly, the sections included in the control section) of the device.

In this case, the device includes, as hardware for executing the program, a computer that includes at least one control device (e.g., a processor) and at least one storage device (e.g., a memory). By the control device executing the program with use of the storage device, the functions described in the foregoing embodiments are realized.

The program may be recorded in one or more non-transitory computer-readable recording media. The one or more recording media may or may not be included in the device. In the latter case, the program may be supplied to the device via any wired or wireless transmission medium.

Alternatively, a part or all of the functions of the control blocks can be realized by a logic circuit. For example, the present invention encompasses, in its scope, an integrated circuit in which a logic circuit that functions as each of the control blocks is formed. Alternatively, the functions of the control blocks can be realized, for example, by a quantum computer.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1, 1h, 100: Information processing device
2, 2d, 5: Control section
21: Initial state decision section (acquisition section)
22: State update section
23: End determination section
24: Function value calculation section
26: Differential value calculation section (calculation section)
28: End determination section

## Claims

1. An information processing device comprising:
an acquisition section that acquires an initial value related to calculation of a value of a target function which includes one or more parameters directly or indirectly as arguments; and
a control section that calculates a differential coefficient of the target function,
a calculation process of calculating the differential coefficient by the control section including a first process and a second process,
the calculation process of calculating the differential coefficient by the control section including a first iterative process,
the first process including a part of the first iterative process,
the second process including a part of the first iterative process other than said part,
the calculation process of calculating the differential coefficient by the control section including a third process that includes a calculation process of automatic differentiation applied to a process which does not include the first process and which includes the second process,
the first process including a first iteration of a process iterated in the first iterative process, and
the first iterative process being an iterative process of obtaining a solution of a self-consistent equation.

2. The information processing device as set forth in claim 1, wherein:
the target function takes, as arguments,
a subset of the one or more parameters and
one or more state variables taking the one or more parameters as arguments;
the iterative process includes an update process of updating the one or more state variables; and
the third process includes a process of calculating the differential coefficient of the target function by using automatic differentiation.

3. The information processing device as set forth in claim 2, wherein:
the control section obtains, by the first iterative process, a numerical solution of each of the one or more state variables taking the one or more parameters as arguments; and
the third process includes a process of calculating, by using automatic differentiation, a differential coefficient that is of the target function with respect to the one or more parameters and that includes a contribution in which the target function depends on the one or more parameters via the one or more state variables.

4. The information processing device as set forth in claim 1, further comprising:
a parameter update section that updates the one or more parameters by using the differential coefficient of the target function,
the control section carrying out a second iterative process, and
in the second iterative process, a process including
the first iterative process and
a process of updating the one or more parameters by using the differential coefficient of the target function
being iterated.

5. The information processing device as set forth in claim 4, wherein:
the target function takes, as arguments,
a subset of the one or more parameters and
one or more state variables taking the one or more parameters as arguments;
the first iterative process includes an update process of updating the one or more state variables;
the control section obtains, by the first iterative process, a numerical solution of each of the one or more state variables taking the one or more parameters as arguments;
the third process includes a process of calculating, by using automatic differentiation, a differential coefficient that is of the target function with respect to the one or more parameters and that includes a contribution in which the target function depends on the one or more parameters via the one or more state variables; and
the automatic differentiation is applied to a process that includes one or more iterations of a process iterated a plurality of times in the first iterative process and that does not include at least one iteration of the process.

6. The information processing device as set forth in any one of claims 1 through 5, wherein:
the third process includes a process of calculating the differential coefficient of the target function by using reverse-mode automatic differentiation.

7. The information processing device as set forth in claim 6, wherein:
at least one of the first process, the second process, and the third process includes at least one of
a convergence determination process that is related to at least one of the one or more state variables and
a convergence determination process that is related to the differential coefficient of the target function.

8. The information processing device as set forth in claim 6, wherein:
in the third process, information that pertains to a calculation process in the second process and that is recorded at a checkpoint is used.

9. An information processing method comprising:
an acquisition step of acquiring an initial value related to calculation of a value of a target function which includes one or more parameters directly or indirectly as arguments; and
a calculation step of calculating a differential coefficient of the target function,
a calculation process of calculating the differential coefficient in the calculation step including a first process and a second process,
the calculation process of calculating the differential coefficient in the calculation step including a first iterative process,
the first process including a part of the first iterative process,
the second process including a part of the first iterative process other than said part,
the calculation process of calculating the differential coefficient in the calculation step including a third process that includes a calculation process of automatic differentiation applied to a process which does not include the first process and which includes the second process,
the first process including a first iteration of a process iterated in the first iterative process, and
the first iterative process being an iterative process of obtaining a solution of a self-consistent equation.

10. A program for causing a computer to function as an information processing device recited in claim 1,
said program causing the computer to function as the acquisition section and the control section.
